# EUROPEAN PATENT APPLICATION

(11) **EP 2 998 336 A1**
(43) Date of publication of application: **23.03.2016**
(21) Application number: 14798070.0
(22) Date of filing: 31.03.2014
(51) Int. Cl.: C08G 59/20, C08G 59/68, C08G 65/18, C08L 63/00

(54) **PHOTO-CURABLE RESIN COMPOSITION FOR OPTICAL COMPONENTS, OPTICAL COMPONENT USING SAME, AND OPTICAL COMPONENT PRODUCTION METHOD**

(30) Priority: 17.05.2013 JP 2013104826
(71) Applicant: Nitto Denko Corporation, Ibaraki-shi, Osaka 567-8680 (JP)
(72) Inventor: TANAKA Yukiko, Ibaraki-shi Osaka 567-8680 (JP)
(74) Representative: Hoffmann Eitle
(86) International application number: PCT/JP2014/059397
(87) International publication number: WO 2014/185180

(57) **Abstract**

A photo-curable resin composition for an optical component is provided, the photo-curable resin composition including: (A) an epoxy resin having a refractive index of not less than 1.57; (B) an alicyclic epoxy resin; (C) an oxetane resin having at least one oxetane ring in its molecule; and (D) a photoacid generator; wherein the resin (A) is present in a proportion of 20 to 75 wt% based on the amount of an overall resin component of the resin composition; wherein the component (D) is present in a proportion of 0.5 to 2.5 parts by weight based on 100 parts by weight of the overall resin component; the resin composition being free from a solvent component and having a viscosity of 0.5 to 25 Pa·s in a 25°C environment. Therefore, the photo-curable resin composition has a higher transparency and a higher refractive index in a cured state, and is excellent in heat resistance and handleability even without addition of a compound having an alcoholic hydroxyl group. The photo-curable resin composition is suitable as an optical lens material and an adhesive material for bonding optical components.

## Description

### TECHNICAL FIELD

The present invention relates to a photo-curable resin composition which contains a transparent resin for optical applications, and is highly transparent to be capable of transmitting optical signals with a lower loss and excellent in heat resistance and the like and advantageous for use as an optical component material such as an optical waveguide material, an optical lens material or an adhesive material for bonding optical components. The present invention further relates to an optical component produced by employing the resin composition, and to an optical component production method.

### BACKGROUND ART

Imaging devices for use in mobile phones and digital cameras include imaging optical lenses. Optical glass materials and transparent plastic materials are generally used as materials for the optical lenses. With recent increase in the ownership rate of mobile phones having an imaging function, a need arises for producing the optical lenses at lower costs. Therefore, polyolefin materials which are optically transparent and allow for easier designing of lenses are dominant plastic lens materials.

Such an imaging device is generally mounted on a printed board by a pin insertion method employing a socket or by a method such that an imaging element is first mounted on the printed board by a solder reflow process and then a lens unit is attached to the imaging element. For mass production at lower costs, it is eagerly desired to mount the imaging device per se on the printed board by the solder reflow process. Where the imaging device per se is mounted on the printed board by the solder reflow process, however, the plastic lens is liable to be softened or dimensionally deformed because the plastic lens is exposed to a high temperature environment at a temperature higher than the softening temperature of the plastic lens. To solve this problem, a production method which employs an inprint process using a photo-curable resin essentially containing a highly heat-resistant epoxy resin as the optical lens material is contemplated and put into practical use. In the inprint process, a predetermined shaping mold is pressed against the resin material, whereby a specific minute pattern or a specific undulation pattern is transferred to the resin material from the shaping mold. From the viewpoint of dimensional stability, there are two types of inprint processes (see, for example, PTL1) : a process such that the shaping mold is pressed against a heat-melted thermoplastic material which is in turn cooled to provide a molded product having a predetermined shape; and a process such that the shaping mold is pressed against a photo-curable resin, which is in turn irradiated with light through the shaping mold or a substrate to provide a molded product having a predetermined shape. Where the heat resistance is required, the epoxy resin is used, as described above, and photo-cured into the molded product.

With recent demand for thickness reduction of the optical lens and higher resolution, a photo-curable resin having an Abbe number (a reciprocal of diffusion rate) of not greater than 50 and, hence, a higher refractive index in a cured state is required. In order to increase the refractive index of a resin composition, it is necessary to use an ingredient having a higher refractive index. For example, it is known that a material having a benzene ring in its skeleton generally has a higher refractive index and a smaller Abbe number in a cured state and, therefore, is useful for increasing the refractive index. However, it is also known that the material originally has a lower transparency and suffers from thermal discoloration. Further, the material often has a higher viscosity. Therefore, it is readily predicted that a resin composition prepared by blending the material also has a higher viscosity and, hence, has poorer handleability.

Conventionally, various considerations have been given for improvement of the transparency. Where the considerations are applied to a resin having a higher refractive index, however, it is impossible to maintain the higher refractive index, making it difficult to improve the transparency of the higher refractive index resin (see PTL2). Further, an attempt is made to suppress the thermal discoloration by addition of an additive while maintaining the higher refractive index. Where a hydroxyl-containing compound is added as the additive, for example, the resin is liable to have a reduced glass transition temperature (Tg) to be thereby brittle, or an intended transparency improving effect cannot be created depending on the amount of the additive to be added (see PTL3).

For improvement of the handleability, it is a general practice to dilute the resin composition with a solvent (a compound having an alcoholic hydroxyl group or the like). Where the solvent is contained in the resin composition, however, the solvent is liable to be evaporated in the photo-curing and molding step to form voids (bubbles) in a cured product.

### RELATED ART DOCUMENT

### PATENT DOCUMENT

PTL1: JP-3926380
PTL2: JP-A-2008-31438
PTL3: JP-A-2012-140502

### SUMMARY OF INVENTION

Thus, the prior art has a problem such that, where the resin has a higher refractive index, it is more difficult to impart the resin with higher transparency.

In view of the foregoing, it is an object of the present invention to provide a photo-curable resin composition which has a higher transparency and a higher refractive index in a cured state and is excellent in heat resistance and handleability even without addition of a compound having an alcoholic hydroxyl group for use as an optical component material such as an optical lens material or an adhesive material for bonding optical components, and to provide an optical component produced by employing the resin composition, and an optical component production method.

According to a first aspect of the present invention to achieve the above object, there is provided a photo-curable resin composition for an optical component, the photo-curable resin composition including: (A) an epoxy resin having a refractive index of not less than 1.57; (B) an alicyclic epoxy resin; (C) an oxetane resin having at least one oxetane ring in its molecule; and (D) a photoacid generator; wherein the resin (A) is present in a proportion of 20 to 75 wt% based on the amount of an overall resin component of the resin composition; wherein the component (D) is present in a proportion of 0.5 to 2.5 parts by weight based on 100 parts by weight of the overall resin component; the resin composition being free from a solvent component and having a viscosity of 0.5 to 25 Pa·s in a 25°C environment.

According to a second aspect of the present invention, there is provided an optical component made of a cured resin obtainable by curing the photo-curable resin composition of the first aspect.

According to a third aspect of the present invention, there is provided an optical component production method, which includes the steps of: filling a shaping mold with the photo-curable resin composition of the first aspect; irradiating the resin composition with light in the shaping mold to cure the resin composition; and heat-treating a resulting cured product.

The inventor of the present invention conducted intensive studies to solve the aforementioned problem. In the studies, the inventor came up with an idea of using a photo-curable resin composition containing the epoxy resin (A) having a refractive index of not less than 1.57, the oxetane resin (C) having at least one oxetane ring in its molecule and the photoacid generator (D) as an optical component material. Then, the inventor further conducted studies and found that, where the alicyclic epoxy resin (B) is added to the resin composition to reduce the viscosity of the resin composition to a desired viscosity level without addition of a solvent component, and the specific epoxy resin (A) and the photoacid generator (D) are contained in specific proportions, it is possible to ensure a higher transparency and a higher refractive index, and attained the intended object to thereby achieve the present invention.

The inventive photo-curable resin composition for the optical component contains the epoxy resin (A) having a refractive index of not less than 1.57, the alicyclic epoxy resin (B), the oxetane resin (C) and the photoacid generator (D). The epoxy resin (A) and the photoacid generator (D) are respectively present in proportions falling within the predetermined ranges in the resin composition. Further, the resin composition contains no solvent component, and has a viscosity of 0.5 to 25 Pa·s in a 25°C environment. Therefore, the resin composition has a higher transparency and a higher refractive index in a cured state, and is excellent in heat resistance and handleability. Without the need for addition of a compound containing an alcoholic hydroxyl group, the problem of the formation of voids in the cured product can be eliminated. With these characteristic properties, the inventive photo-curable resin composition for the optical component has advantageous functions as an optical waveguide material, an optical lens material, an adhesive material for bonding optical components, and other materials. Further, the inventive photo-curable resin composition for the optical component may be cured alone, or may be cured on other member, e.g., on a transparent substrate such as of glass. By combining the cured product with the transparent substrate, a higher-quality hybrid lens can be produced.

Where the optical component is produced by filling the shaping mold with the inventive photo-curable resin composition, irradiating the resin composition with light in the shaping mold to cure the resin composition, and heat-treating the resulting cured product, the optical component thus produced is excellent in transparency (free from thermal discoloration), and has stable mechanical properties against thermal stress.

### DESCRIPTION OF EMBODIMENTS

Next, embodiments of the present invention will be described in detail. However, it should be understood that the present invention be not limited to the embodiments.

A photo-curable resin composition for an optical component according to the embodiment (hereinafter referred to simply as "photo-curable resin composition") contains: (A) an epoxy resin having a refractive index of not less than 1.57; (B) an alicyclic epoxy resin; (C) an oxetane resin; and (D) a photoacid generator. In the resin composition, the components (A) and (D) are respectively present in proportions falling within specific ranges. The resin composition is free from a solvent component, and has a viscosity of 0.5 to 25 Pa·s in a 25°C environment.

The components (A) to (D) will hereinafter be described in order.

Examples of the epoxy resin (A) include bisphenol-A epoxy resins, bisphenol-F epoxy resins, bisphenol-S epoxy resins, phenol novolak epoxy resins, fluorene epoxy resins, biphenyl epoxy resins, naphthalene epoxy resins and adamantane epoxy resins, which each have a refractive index of not less than 1.57. These may be used either alone or in combination. For the refractive index, the transparency and the viscosity, a compound represented by the following general formula (1) is preferably used. In this case, the compound particularly preferably has an epoxy equivalent of 150 to 700 g/eq. In order to provide a cured product having a smaller Abbe number, a fluorene epoxy resin is preferably used in combination with the compound so as not to impair the transparency. The refractive index is determined, for example, by polishing a surface of a cured product obtained by curing a single epoxy resin by means of a grinder, and measuring the refractive index of the cured product by means of a refractometer (available from Atago Co., Ltd.) 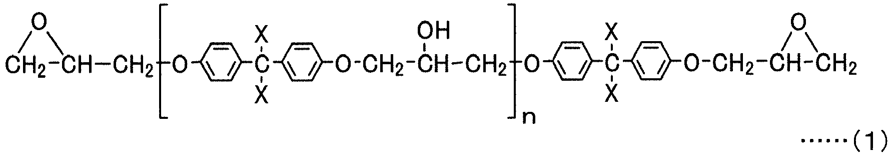 wherein X is CₘH₂ₘ₊₁ (m: an integer of 1 to 3), and n is a positive integer or 0.

The proportion of the epoxy resin (A) should be 20 to 75 wt%, and is preferably 20 to 70 wt%, based on the amount of an overall resin component of the inventive photo-curable resin composition. If the proportion of the epoxy resin (A) is less than the above range, it will be impossible to provide a cured product having the desired Abbe number. If the proportion of the epoxy resin (A) is greater than the above range, on the other hand, it will be difficult to reduce the viscosity of the resin composition.

Examples of the alicyclic epoxy resin (B) include 3,4-epoxycyclohexylmethyl-3,4-epoxycyclohexane carboxylate, and an adduct of 2,2-bis(hydroxymethyl)-1-butanol with 1,2-epoxy-4-(2-oxysilanyl)cyclohexane. These may be used either alone or in combination.

The proportion of the alicyclic epoxy resin (B) is preferably 10 to 50 wt%, more preferably 10 to 40 wt%, based on the amount of the overall resin component of the inventive photo-curable resin composition. If the proportion of the alicyclic epoxy resin (B) is less than the above range, it will be difficult to reduce the viscosity of the resin composition without the addition of the solvent component. If the proportion of the alicyclic epoxy resin (B) is greater than the above range, on the other hand, it will be impossible to provide a cured product having the desired Abbe number.

The oxetane resin (C) to be used together with the epoxy resins (A) and (B) is an oxetane resin having at least one oxetane ring in its molecule. Examples of the oxetane resin (C) include 1,4-bis{[(3-ethyl-3-oxetanyl)methoxy]methyl}benzene, di[2-(3-oxetanyl)butyl] ether, 3-ethyl-3-hydroxymethyloxetane, 1,4-bis[(3-ethyloxetan-3-yl)methoxy]benzene, 1,3-bis[(3-ethyloxetan-3-yl)methoxy]benzene, 1,2-bis[(3-ethyloxetan-3-yl)methoxy]benzene, 4,4'-bis[(3-ethyloxetan-3-yl)methoxy]biphenyl, 2,2'-bis[(3-ethyl-3-oxetanyl)methoxy]biphenyl, 3,3',5,5'-tetramethyl[4,4'-bis(3-ethyloxetan-3-yl)m ethoxy]biphenyl, 2,7-bis[(3-ethyloxetan-3-yl)methoxy]naphthalene, 1,6-bis[(3-ethyloxetan-3-yl)methoxy]-2,2,3,3,4,4,5, 5-octafluorohexane, 3(4),8(9)-bis[(1-ethyl-3-oxetanyl)methoxy]methyl-tr icyclo[5,2,1,2,6]decane, 1,2-bis{[2-(1-ethyl-3-oxetanyl)methoxy]ethylthio}et hane, 4,4'-bis[(1-ethyl-3-oxetanyl)methyl]thiobenzene thioether, 2,3-bis[(3-ethyloxetan-3-yl)methoxymethyl]norbornan e, 2-ethyl-2-[(3-ethyloxetan-3-yl)methoxymethyl]-1,3-0 -bis[(1-ethyl-3-oxetanyl)methyl]-propane-1,3-diol, 2,2-dimethyl-1,3-o-bis[(3-ethyloxetan-3-yl)methyl]-propane-1,3-diol, 2-butyl-2-ethyl-1,3-o-bis[(3-ethyloxetan-3-yl)methy 1]-propane-1,3-diol, 1,4-o-bis[(3-ethyloxetan-3-yl)methyl]-butane-1,4-di ol and 2,4,6-o-tris[(3-ethyloxetan-3-yl)methyl]cyanurate, which may be used either alone or in combination.

The proportion of the oxetane resin (C) is preferably 5 to 50 wt%, more preferably 8 to 50 wt%, based on the amount of the overall resin component of the inventive photo-curable resin composition. If the proportion of the oxetane resin (C) is less than the above range, the curing accelerating effect of the addition of the oxetane resin (C) is liable to be reduced, and the transparency is liable to be impaired. If the proportion of the oxetane resin (C) is greater than the above range, on the other hand, it will be impossible to provide a cured product having the desired Abbe number.

The photoacid generator (D) to be used together with the resins (A) to (C) in the inventive photo-curable resin composition may be any of photoacid generators capable of initiating cationic polymerization. Examples of the photoacid generators include onium salts which contain an anion moiety such as containing antimony or phosphorus and a cation moiety such as sulfonium, iodonium or phosphonium. Specific examples of the photoacid generators include aromatic phosphonium salts, aromatic iodonium salts, aromatic phosphonium salts and aromatic sulfoxonium salts, which may be used either alone or in combination. For the photo-curability and the transparency, an onium salt containing hexafluorophosphate or hexafluoroantimonate as the anion moiety is preferred.

The proportion of the photoacid generator (D) should be 0.5 to 2.5 parts by weight, and is preferably 0.5 to 2.0 parts by weight, based on 100 parts by weight of the overall resin component of the inventive photo-curable resin composition. If the proportion of the photoacid generator (D) is less than the above range, the curability is liable to be deteriorated, and the heat resistance is liable to be reduced. If the proportion of the photoacid generator (D) is greater than the above range, on the other hand, the curability will be improved, but the transparency of the cured product is liable to be impaired.

In addition to the components (A) to (D), a photo-sensitizer such as anthracene and an acid proliferating agent may be blended in the inventive photo-curable resin composition for improvement of the curability. A monofunctional or bifunctional epoxy resin and the like may be further blended in the resin composition for improvement of the handleability. Where the cured product is formed on a substrate such as of glass, a silane or titanium coupling agent may be added to the resin composition for increasing the adhesion to the substrate. As required, a flexibility imparting agent such as a synthetic rubber or a silicone compound, an antioxidant, a defoaming agent, pigments, dyes, an inorganic filler and other additives may be blended in the resin composition.

The inventive photo-curable resin composition may be prepared by blending predetermined proportions of the components (A) to (D) and, as required, any of the additives, and heat-melting and mixing the resulting blend.

The inventive photo-curable resin composition has a viscosity of 0.5 to 25 Pa·s (preferably 0.5 to 20 Pa·s) in a 25°C environment. Therefore, the resin composition is excellent in handleability and the like. Since the resin composition is imparted with the viscosity falling within the aforementioned range without the addition of the solvent component, the problem of the formation of voids in the cured product can be eliminated which may otherwise occur when the solvent is evaporated during the photo-curing and molding step. The viscosity of the photo-curable resin composition may be measured, for example, at a temperature of 25°C with the use of a standard rotor (1°34' × R24) by means of an E-80 type viscometer (RE-80U) available from Toki Sangyo Co., Ltd. Particularly, the voids are more liable to be formed when the resin composition is confined to be molded in a mold. Therefore, if the possibility of the formation of the voids is eliminated by controlling the production conditions and the like, a solvent may be added to the inventive photo-curable resin composition.

The inventive photo-curable resin composition is used, for example, in the following manner. The resin composition is applied on a transparent substrate such as of glass, and a predetermined shaping mold is pressed against the resin composition to be thereby filled with the resin composition, which is in turn irradiated with light. Then, the shaping mold is removed. Thus, a cured product (molded product) produced by curing the resin composition and combined with the transparent substrate is provided. A hybrid lens, for example, is produced from the inventive photo-curable resin composition by this production method. The inventive photo-curable resin composition may be cured alone in the shaping mold to provide an optical component such as an optical lens. Further, the cured product obtained by the irradiation with the light may be heat-treated at a predetermined temperature as required. The heat treatment of the cured product after the irradiation with the light effectively suppresses thermal discoloration during the solder reflow process, and imparts the cured product with stable mechanical properties against thermal stress. Therefore, the inventive cured product can be advantageously used when a component incorporating the inventive cured product and other components are simultaneously mounted by the solder reflow process. Further, the heat treatment effectively increases the adhesion between the cured product and the transparent substrate.

For example, a UV lamp device or the like may be used for the light irradiation. Exemplary light sources include a low pressure mercury lamp, a high pressure mercury lamp, an ultrahigh pressure mercury lamp and a xenon lamp. The irradiation dose is preferably 2000 to 200000 mJ/cm². If the irradiation dose is less than the above range, it will be impossible to provide an intended cured product configuration on the substrate due to insufficient curing. If the irradiation dose is greater than the above range, on the other hand, discoloration is liable to occur in the subsequent heat treatment due to photo-degradation caused by excessive light irradiation. Conditions for the heat treatment to be performed after the light irradiation are preferably a treatment temperature of 80°C to 170°C and a treatment period of about 1 hour.

The inventive photo-curable resin composition may be formed into a sheet without the use of the shaping mold.

The inventive photo-curable resin composition is usable as a material (optical component material) for an optical component such as an optical lens, which is to be produced by the aforementioned production method. In addition, the inventive photo-curable resin composition is usable as a photo-curable adhesive agent for bonding an optical waveguide and other optical components.

The inventive optical component (cured resin product) such as the aforementioned optical lens preferably has an Abbe number of 29 to 45, more preferably 29 to 43. That is, the use of the inventive photo-curable resin composition makes it possible to impart the optical component with an Abbe number falling within the aforementioned range. The cured product produced by curing the inventive photo-curable resin composition has a smaller Abbe number and a higher refractive index as described above, and yet has a higher transparency and is substantially free from the thermal discoloration. Thus, the characteristic properties of the cured product are well-balanced. The Abbe number is determined, for example, by polishing a surface of the optical component by means of a grinder, and measuring the refractive index of the optical component by means of a refractometer (available from Atago Co. , Ltd.)

Next, the present invention will be described by way of examples thereof in conjunction with comparative examples. It should be understood that the present invention be not limited to these examples.

### EXAMPLES

Prior to preparation of photo-curable resin compositions of Examples, the following epoxy resins, oxetane resins, photoacid generators and additives were prepared.

### <Epoxy resins each having refractive index of not less than 1.57>

[a-1] Bisphenol-A epoxy resin (which had an epoxy equivalent of 172 g/eq, a viscosity of 4400 mPa·s (in a 25°C environment) and a refractive index of 1.57)
[a-2] Bisphenol-A epoxy resin (which was solid (in a 25°C environment), and had an epoxy equivalent of 650 g/eq, a softening point of 80°C and a refractive index of 1.57)
[a-3] Bisphenol-A epoxy resin (which was solid (in a 25°C environment), and had an epoxy equivalent of 175 g/eq, a softening point of 45°C and a refractive index of 1.57)
[a-4] Bisphenol-F epoxy resin (which had an epoxy equivalent of 162 g/eq, a viscosity of 2000 mPa·s (in a 25°C environment) and a refractive index of 1.57)
[a-5] Bifunctional fluorene epoxy resin (which had an epoxy equivalent of 259 g/eq and a refractive index of 1.64)
[a-6] Tetrafunctional fluorene epoxy resin (which had an epoxy equivalent of 210 g/eq and a refractive index of 1.64)

### <Alicyclic epoxy resin>

[a-7] 3',4'-Epoxycyclohexylmethyl-3,4-epoxycyclohexane carboxylate (which had a refractive index of 1.49 to 1.50)

### <Oxetane resin>

[b-1] 3-Ethyl-3{[(3-ethyloxetan-3-yl)methoxy]methyl}oxeta ne,
[b-2] Xylylene bisoxetane
[b-3] 3-Ethyl-3-phenoxymethyl oxetane
[b-4] 3-Ethyl-3-hydroxymethyloxetane (oxetane alcohol)
[b-5] 4,4'-Bis[(3-ethyl-3-oxetanyl)methoxymethyl]biphenyl

### <Photoacid generator [c-1]>

A triaryl sulfonium salt photoacid generator (50 wt% propylene carbonate solution) containing an anion moiety of Sb₆⁻ and a cation moiety represented by the following structural formula (2):

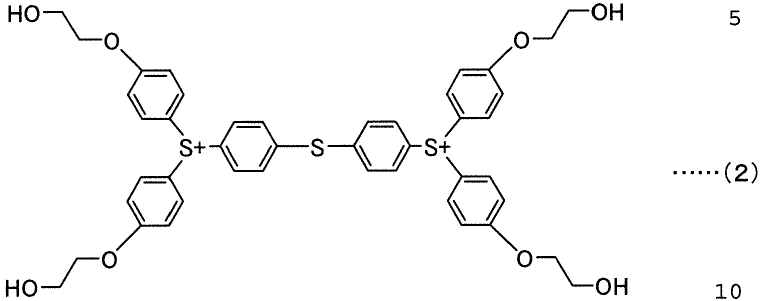

### <Photoacid generator [c-2]>

A triaryl sulfonium salt photoacid generator (50 wt% propylene carbonate solution) containing an anion moiety of PF₆⁻ and a cation moiety represented by the following structural formula (3):

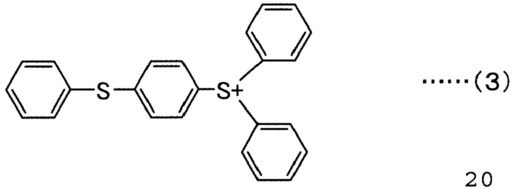

### <Other additives>

### [d-1 (Silane coupling agent)]

3-Glycidoxypropylmethyldiethoxysilane

### [d-2 (Antioxidant)]

Pentaerythryltetrakis[3-(3',5'-di-t-butyl-4-hydroxy phenyl) propionate]

### [d-3 (Antioxidant)]

9,10-dihydro-9-oxa-10-phosphaphenanthrene-10-oxide

### <Solvent>

### Ethanol

### [Examples 1 to 6 and Comparative Examples 1 to 6]

Photo-curable resin compositions were each prepared by blending the aforementioned ingredients in proportions shown below in Tables 1 and 2, and then heat-melting and mixing the resulting blend.

The photo-curable resin compositions of Examples and Comparative Examples thus prepared were each evaluated for characteristic properties based on the following criteria. The results are also shown below in Tables 1 and 2.

### <<Refractive index and Abbe number»

The photo-curable resin compositions (liquid resins) were each poured in a transparent mold having a size of 1 × 1.5 × 0.5 cm, and irradiated with UV at 16,000 mJ/cm² to be thereby cured. Then, the resulting product was demolded from the mold, and heat-treated at 150°C for 1 hour. The surface of the resulting molded product was polished by means of a grinder, and then the refractive index and the Abbe number of the molded product were measured in a 25°C environment by means of a refractometer (available from Atago Co., Ltd.)

### <<Ordinary temperature viscosity and handleability>>

The viscosity (ordinary temperature viscosity) of each of the photo-curable resin compositions was measured in a 25°C environment by means of an E-type viscometer. In evaluation for handleability, a photo-curable resin composition having a viscosity of higher than 25 Pa·s was rated as unacceptable (x) with poorer handleability, and a photo-curable resin composition having a viscosity of not higher than 25 Pa·s was rated as acceptable (o) with excellent handleability.

### <<Curability (gelation time)>>

The photo-curable resin compositions were each evaluated for curability through measurement of a gelation time by means of a UV rheometer (available from Rheologica Corporation and employing 15-mmφ aluminum parallel plates) with the use of a light source of a mercury lamp (LC-8 with an illuminance of 10 mW/cm² at 365 nm) available from Hamamatsu Photonics K.K. The gelation time to be measured by means of the UV rheometer is defined as time required for an elasticity term (G') calculated based on the viscoelasticity of the photo-curable resin composition at 25°C to reach G' = 1.0 × 10⁶ Pa. In this evaluation, a shorter gelation time means higher speed curability. A photo-curable resin composition having a gelation time of shorter than 300 seconds was rated as excellent (○○). A photo-curable resin composition having a gelation time of not shorter than 300 seconds and shorter than 1000 seconds was rated as acceptable (○). A photo-curable resin composition having a gelation time of not shorter than 1000 seconds was rated as unacceptable (x).

### <<Tg evaluation>>

The photo-curable resin compositions were each formed into a film having a thickness of 500 µm on a PET film (DIAFOIL MRF-50 available from Mitsubishi Chemical Polyester Film Co.) and treated with silicone for releasability, and the film was primarily cured by irradiation with light (at an irradiation dose of 8000 mJ/cm²). Thereafter, the film was heat-treated at 150°C for 1 hour, whereby a cured product was produced. A test sample having a width of 5 mm and a length of 25 mm was cut out of the cured product thus produced, and the storage elastic modulus and the loss elastic modulus of the test sample were measured in a temperature range of RT (room temperature) to 200°C at a frequency of 1 Hz by means of a dynamic viscoelasticity meter (RSA-III available from Rheometric Co., Ltd.) Based on the storage elastic modulus and the loss elastic modulus, a Tan δ curve was obtained, and a peak temperature of the Tan δ curve thus obtained was defined as a glass transition temperature (Tg). A sample having a Tg of not lower than 120°C was rated as excellent (○○), and a sample having a Tg of not lower than 80°C and lower than 120°C was rated as acceptable (○). A sample having a Tg of lower than 80°C was rated as unacceptable (x).

### <<Thermal discoloration resistance (transparency)>>

The photo-curable resin compositions were each formed into a film having a thickness of 600 µm on a PET film (DIAFOIL MRF-50 available from Mitsubishi Chemical Polyester Film Co.) and treated with silicone for releasability, and the film was primarily cured by irradiation with light (at an irradiation dose of 8000 mJ/cm²). Thereafter, the film was heat-treated at 150°C for 1 hour (for post mold cure (PMC)), whereby a cured product was produced. A test sample having a size of 3 cm square was cut out of the cured product thus produced, and transported through a reflow furnace at 260°C for 10 seconds. The test sample was evaluated for discoloration degrees after the PMC and after the reflow through measurement of yellow index values (YI values) in a transmissive mode by means of a color computer (SM-T available from Suga Test Instruments Co., Ltd.) A smaller YI value means a lower discoloration degree and, hence, higher transparency. A sample having a YI value of not greater than 5 was rated as excellent (○○), and a sample having a YI value of greater than 5 and not greater than 10 was rated as acceptable (○). A sample having a YI value of greater than 10 was rated as unacceptable (x).

**Table 1 (parts by weight)**

| | Example | | | | | |
|---|---|---|---|---|---|---|
| | 1 | 2 | 3 | 4 | 5 | 6 |
| Epoxy resin | | | | | | |
| a-1 | 10 | 10 | - | - | - | - |
| a-2 | 25 | 25 | 20 | - | - | - |
| a-3 | - | - | - | 45 | - | 50 |
| a-4 | - | - | - | - | 20 | - |
| a-5 | - | - | - | 20 | 23 | 25 |
| a-6 | - | - | - | - | - | - |
| a-7 | 35 | 35 | 50 | 25 | 10 | 17 |
| Oxetane resin | | | | | | |
| b-1 | 30 | 30 | 30 | - | - | - |
| b-2 | - | - | - | - | - | - |
| b-3 | - | - | - | - | - | - |
| b-4 | - | - | - | 10 | - | - |
| b-5 | - | - | - | - | 47 | 8 |
| Photoacid generator *1) | | | | | | |
| c-1 | 2 | - | 1 | - | 1.5 | 2.0 |
| c-2 | - | 5 | - | 4 | - | - |
| Other additives | | | | | | |
| d-1 | 1 | 1 | 1 | 1 | 1 | 1 |
| d-2 | 0.5 | 0.5 | 0.5 | 0.5 | 0.5 | 0.5 |
| d-3 | 0.5 | 0.5 | 0.5 | - | 0.5 | - |
| Solvent | - | - | - | - | - | - |
| Solid refractive index | 1.53 | 1.53 | 1.52 | 1.57 | 1.59 | 1.59 |
| Abbe number | 43 | 43 | 45 | 33 | 29 | 29 |
| Ordinary temperature viscosity (Pa·s) | 2 | 1.5 | 2.5 | 2 | 13 | 21 |
| Handleability | ○ | ○ | ○ | ○ | ○ | ○ |
| Curability | ○○ | ○○ | ○○ | ○ | ○ | ○ |
| Tg evaluation | ○○ | ○ | ○○ | ○ | ○ | ○○ |
| Thermal discoloration resistance | | | | | | |
| After PMC | ○○ | ○○ | ○○ | ○○ | ○○ | ○○ |
| After reflow | ○○ | ○○ | ○ | ○○ | ○ | ○ |
| Remark | - | - | - | - | - | - |

**Table 2 (parts by weight)**

| | Comparative Example | | | | | |
|---|---|---|---|---|---|---|
| | 1 | 2 | 3 | 4 | 5 | 6 |
| Epoxy resin | | | | | | |
| a-1 | - | - | - | | - | - |
| a-2 | 17 | - | - | - | - | - |
| a-3 | - | 20 | - | - | - | 60 |
| a-4 | - | - | - | 30 | 30 | - |
| a-5 | - | - | - | 23 | 23 | 30 |
| a-6 | - | 25 | 35 | - | - | - |
| a-7 | 50 | 30 | 35 | - | - | - |
| Oxetane resin | | | | | | |
| b-1 | 33 | - | - | - | - | - |
| b-2 | - | 25 | - | - | - | - |
| b-3 | - | - | 30 | - | - | - |
| b-4 | - | - | - | - | - | 10 |
| b-5 | | - | - | 47 | 47 | - |
| Photoacid generator *1) | | | | | | |
| c-1 | 2 | - | - | 1.5 | 1.5 | - |
| c-2 | - | 0.8 | 6 | - | - | 4 |
| Other additives | | | | | | |
| d-1 | 1 | 1 | 1 | 1 | 1 | 1 |
| d-2 | 0.5 | 0.5 | 0.5 | 0.5 | 0.5 | 0.5 |
| d-3 | 0.5 | 0.5 | - | 0.5 | 0.5 | - |
| Solvent | - | - | - | - | *2) | - |
| Solid refractive index | 1.52 | 1.57 | 1.56 | 1.60 | 1.58 | - |
| Abbe number | 47 | 34 | 35 | 29 | 30 | - |
| Ordinary temperature viscosity (Pa·s) | 2.3 | 18 | 1.5 | 27 | 0.85 | >50 |
| Handleability | ○ | ○ | ○ | × | ○ | × |
| Curability | ○○ | × | ○○ | ○ | ○ | ○ |
| Tg evaluation | ○○ | × | ○ | ○ | ○ | - |
| Thermal discoloration resistance | | | | | | |
| After PMC | ○○ | ○○ | ○○ | ○ | ○ | - |
| After reflow | ○ | ○ | × | ○ | × | - |
| Remark | - | - | - | - | *3) | *4) |

| | | | | | | |
|---|---|---|---|---|---|---|
| *1) Proportion of 50 wt% propylene carbonate solution of photoacid generator. *2) Solvent (ethanol) was added so as to adjust solid concentration to 90%. *3) Bubbles and streaks occurred when resin composition was cured in confined state. *4) Molding was impossible with excessively poor handleability. | | | | | | |

The results shown in the above tables indicate that the photo-curable resin compositions of Examples each had a smaller Abbe number and a higher refractive index in a cured state, and were excellent in thermal discoloration resistance with a smaller YI value after the post mold cure or the reflow. The photo-curable resin compositions of Examples were solvent-free, but each had a lower viscosity and were excellent in handleability, curability and Tg evaluation. The photo-curable resin compositions of Examples contained no solvent and, therefore, were free from voids (bubbles) and the like when being cured in a confined state (when being cured by irradiation with light). Thus, the use of the photo-curable resin compositions of Examples makes it possible to provide optical lenses each having a higher refractive index and excellent thermal discoloration resistance. Optical components produced by using these resin compositions were free from thermal discoloration during the solder reflow process, and each had stable mechanical properties against thermal stress. Therefore, an imaging device collectively incorporating such an optical component and other elements can be advantageously mounted on a printed board by the solder reflow process.

In contrast, the photo-curable resin composition of Comparative Example 1, which contained a smaller proportion of an epoxy resin having a refractive index of not lower than 1.57, failed to provide the desired Abbe number. The photo-curable resin composition of Comparative Example 2, which contained an excessively small proportion of the photoacid generator, was excellent in transparency, but poorer in curability with a lower Tg. The photo-curable resin composition of Comparative Example 3, which contained an excessively great proportion of the photoacid generator, was excellent in curability and Tg evaluation, but poorer in thermal discoloration resistance. The photo-curable resin compositions of Comparative Examples 4 and 6, which contained no alicyclic epoxy resin (liquid epoxy resin), were poorer in handleability with a higher viscosity. The photo-curable resin composition of Comparative Example 5, which was obtained by diluting the photo-curable resin composition of comparative Example 4 with ethanol for increasing the handleability, failed to provide an intended molded product, with voids (bubbles) and the like formed in the molded product when being cured in a confined state (cured by irradiation with light).

While specific forms of the embodiments of the present invention have been shown in the aforementioned inventive examples, the inventive examples are merely illustrative of the invention but not limitative of the invention. It is contemplated that various modifications apparent to those skilled in the art could be made within the scope of the invention.

The inventive photo-curable resin composition can provide a three-dimensionally shaped product (cured product) having higher transparency and a higher refractive index and, therefore, is useful as a material for an optical component such as an optical lens (optical component material) or as an adhesive agent or the like for bonding an optical component in an optical application. The optical component produced by using the inventive photo-curable resin composition is highly reliable and, therefore, is usable as an optical lens and other optical components (optical products).

## Claims

1. A photo-curable resin composition for an optical component, the photo-curable resin composition comprising:
(A) an epoxy resin having a refractive index of not less than 1.57;
(B) an alicyclic epoxy resin;
(C) an oxetane resin having at least one oxetane ring in its molecule; and
(D) a photoacid generator;
wherein the resin (A) is present in a proportion of 20 to 75 wt% based on an amount of an overall resin component of the resin composition;
wherein the component (D) is present in a proportion of 0.5 to 2.5 parts by weight based on 100 parts by weight of the overall resin component; and
wherein the resin composition is free from a solvent component and has a viscosity of 0.5 to 25 Pa·s in a 25°C environment.

2. The photo-curable resin composition according to claim 1, wherein the epoxy resin (A) is a compound represented by the following general formula: 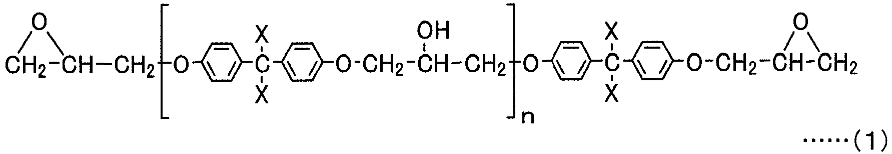 wherein X is CₘH₂ₘ₊₁ (m: an integer of 1 to 3), and n is a positive integer or 0.

3. The photo-curable resin composition according to claim 1 or 2, wherein the photoacid generator (D) is an onium salt containing hexafluorophosphate or hexafluoroantimonate as an anion moiety.

4. The photo-curable resin composition according to any one of claims 1 to 3, wherein the alicyclic epoxy resin (B) is present in a proportion of 10 to 50 wt% based on the amount of the overall resin component of the resin composition.

5. The photo-curable resin composition according to any one of claims 1 to 4, wherein the oxetane resin (C) is present in a proportion of 5 to 50 wt% based on the amount of the overall resin component of the resin composition.

6. The photo-curable resin composition according to any one of claims 1 to 5, wherein the resin composition has an Abbe number of 29 to 45 in a cured state.

7. An optical component comprising a cured resin obtainable by curing the photo-curable resin composition according to any one of claims 1 to 6.

8. An optical component production method comprising the steps of:
filling a shaping mold with the photo-curable resin composition according to any one of claims 1 to 6;
irradiating the resin composition with light in the shaping mold to cure the resin composition; and
heat-treating a resulting cured product.
